# EUROPEAN PATENT APPLICATION

(11) **EP 2 546 787 A1**
(43) Date of publication of application: **16.01.2013**
(21) Application number: 11305924.0
(22) Date of filing: 13.07.2011
(51) Int. Cl.: G06Q 10/00, G06Q 50/00

(54) **Fare invalidation auditing system**

(71) Applicant: Amadeus S.A.S., 06410 Biot (FR)
(72) Inventor: Landra, Corinne, 06650 LE ROURET (FR); Dourthe, Cédric, 06000 NICE (FR); Camberbec Aurélie, 06130 GRASSE (FR)
(74) Representative: Decobert, Jean-Pascal

(57) **Abstract**

Disclosed is a method to operate a pricing engine in response to a request to price a travel product. The method includes processing fare-related data and, in response to the pricing engine invalidating a fare in the fare-related data, automatically invoking an invalidation handler for storing information in an invalidation log associated with the invalidated fare, including a reason for the fare being invalidated. The method further includes processing the information stored in the invalidation log in conjunction with other information and storing in a data repository at least one consolidated view configured to display to a user information descriptive of at least one reason why the fare was invalidated.

## Description

### TECHNICAL FIELD

The invention is in the field of data processing in connection with the handling of invalid data which here means data which cannot be normally processed by an engine.

The exemplary embodiments of this invention relate generally to travel processing systems and methods and, more specifically, relate to the issuance and subsequent processing of electronic tickets such as, but not limited to, tickets for air travel, and even more specifically relate to Fares Filing Auditing tools that form a part of a Fares Analysis system. The exemplary embodiments are most specifically directed to methods and systems that implement a Fare Invalidation Auditing system.

### BACKGROUND

Air fare providers file a large number of fares each comprised of complex definition and rules data. The fares data can be filed via an intermediate filing system or directly into the system of a global distribution system (GDS). One such GDS is provided by Amadeus s.a.s. In practice only a valid portion of the filed data that actually matches desired flights and availability criteria is returned within pricing solutions to commercial applications. Furthermore a considerable portion of the data can be invalidated by pricing engines for many reasons.

While tools exist to file the fares data currently there is no efficient way of auditing how the pricing system behaves when using the filed fares data. At present, there is no efficient technique for a data filer to ensure that a fare is "valid", i.e., that the fare can be successfully processed by a search engine.

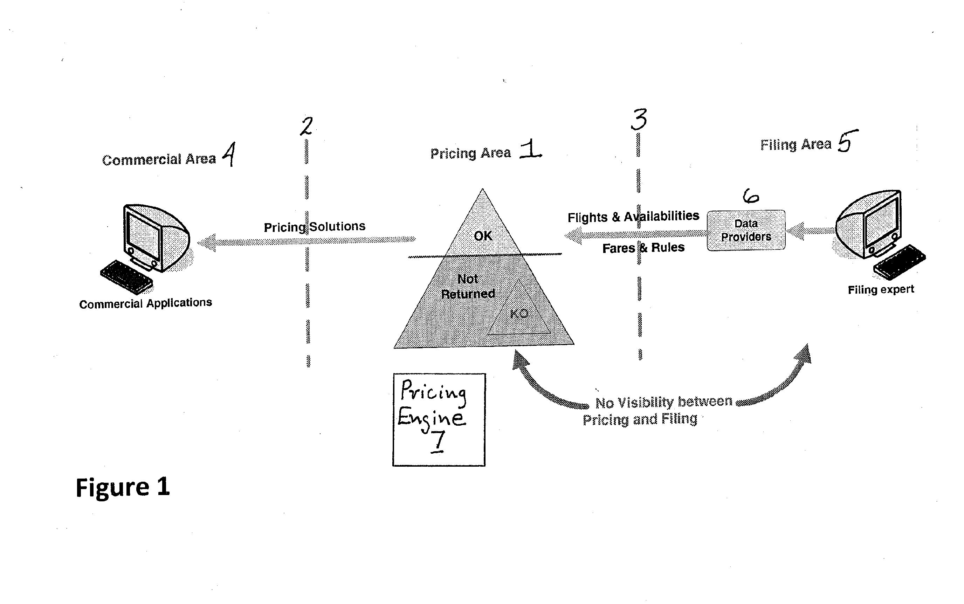

One problem that arises in that the data filer (on behalf of the air fare provider or for himself) has no way to determine in the GDS that the fare data that was filed is capable of being actually returned by a pricing system (engine). Reference in this regard can be made to Figure 1. Consider a system having a pricing area 1 with interfaces 2 and 3 to a commercial area 4 and a filing area 5, respectively. Commercial applications run in the commercial area 4 and make queries to a Pricing Engine 7 in the pricing area 1 regarding fares. A data filer, shown in Figure 1 as a filing expert, inputs data to the pricing area 1 for one or more data providers 6. This inputted data includes flights, availabilities, fares and various associated rules. The inputted data is stored in one or more large databases that the Pricing engine 7 has access to. A limited part of the inputted data will be acceptable and usable by the Pricing Engine 7. However, and for whatever reason or reasons at least some of the inputted data will not be usable. As a result a query made from the commercial area 4 to the pricing area 1 will never return a price/fare associated with the not-usable entered data. This can be referred to as a fare invalidation event. At present, however, there is no visibility between the pricing area 1 and the filing area 5. As a result an investigation as to possible causes of a fare invalidation event is difficult to accomplish, as it is basically a manual, iterative process that involves a considerable amount of interaction between the customer (e.g., the data provider 6) and the GDS that maintains and operates the pricing and commercial areas 1 and 4.

In US2003/0130901 A1 (Archibald et al.) disclose a method for checking errors during a pricing process. The checking step occurs after a price amount is calculated.

In US2004/0199441 A1 (Mayfield) describes price checking steps comprising a comparison of a calculated price with a price bound and an error flag is triggered depending on the result of the comparison. However, the error flag does not provide a reason for the invalidation at the fare level.

In commonly owned WO2009/106492 A1 (Raufaste et al.) there are disclosed checking steps made during the issuance of a ticket, a new calculation of the ticket price and a verification of the rules applied for the ticket. This technique may be considered as to be related to auditing of price instead of a fare.

The above remarks show that there is currently no technical means to efficiently handle invalid data. One technical problem it raises is that the computer system - such as a pricing engine - may consume important resources in vain when attempting to process invalid data. All the efforts of the Pricing Engine 7 are concentrated on valid data processing in order to return a full set of priced solutions with the lowest time cost. There is currently no visibility of a loss of processing efficiency and no technical solution to remedy an invalidity of data such as fare data.

### SUMMARY

The foregoing and other problems are overcome, and other advantages are realized, in accordance with the embodiments of this invention.

In one aspect thereof the exemplary embodiments of this invention provide a method to operate a pricing engine in response to a request to price a travel product. The method comprises processing fare-related data and, in response to the pricing engine invalidating a fare in the fare-related data, automatically invoking an invalidation handler for storing information in an invalidation log associated with the invalidated fare, including a reason for the fare being invalidated; processing the information stored in the invalidation log in conjunction with other information; and storing in a data repository at least one consolidated view configured to display to a user information descriptive of at least one reason why the fare was invalidated.

Optional features of the method are introduced hereafter:
- the invalidation handler is configured to make a determination, based on a cause for the fare being invalidated, whether the pricing engine can continue to process the fare;
- the invalidation handler makes the determination based on a set of predetermined rules.
- the invalidation handler makes the determination based on a consideration of all fare checks during a fare pricing flow that can cause an invalidation, and a consideration of dependencies between the different fare checks of the pricing flow, and applies a set of rules comprising,
   if no data can be found from the fare the fare is flagged as being invalidated and the pricing engine does not continue to process the fare;
   otherwise, if data can be found and if there is no dependency for another fare check in the fare pricing flow the fare is flagged as being invalidated and the pricing engine does continue to process the fare;
   otherwise, if data can be found and if there is a dependency for another fare check in the fare pricing flow a determination is made if the processing for the another fare check can be simulated,
- if the processing for the additional fare check can be simulated then the fare is flagged as being invalidated and the pricing engine does continue to process the fare, and if the processing for the additional fare check cannot be simulated then the fare is flagged as being invalidated and the pricing engine does not continue to process the fare;
- the fare is invalidated for violating at least one of a fare construction criterion and a fare rule restriction criterion, and the information stored in the invalidation log is descriptive of at least what operations were performed by the pricing engine on the fare and which criterion or criteria caused the fare to be invalidated.
- processing the information stored in the invalidation log in conjunction with other information comprises processing the information stored in the invalidation log in conjunction with related product data from a pricing and shopping platform database.
- processing the information stored in the invalidation log in conjunction with other information further comprises generating statistics regarding recurring errors that result in fare invalidations;
- generating statistics comprises examining historical invalidation logs.

In another aspect thereof the exemplary embodiments of this invention provide a system that comprises at least one data processor configured to operate a pricing engine in response to a request to price a travel product. The at least one data processor operates to process fare-related data and, in response to the pricing engine invalidating a fare in the fare-related data, automatically invokes an invalidation handler to store information in an invalidation log associated with the invalidated fare, including a reason for the fare being invalidated. The at least one data processor further operates to process the information stored in the invalidation log in conjunction with other information and to store in a data repository at least one consolidated view configured to display to a user information descriptive of at least one reason why the fare was invalidated.

The invention also relates to a non-transitory computer-readable medium that contains software program instructions, where execution of the software program instructions by at least one data processor results in performance of operations that comprise execution of methods in accordance with this invention.

According to a preferred aspect of the invention, the processing of data can be continued even if it relates to invalidated fares. Whereas a conventional system would at best return information that the data is flagged as faulty, the use of this invention does enable the computer process to attempt to overcome the invalidation and to continue the process. Thus invalidation is treated more efficiently than before especially when plural invalidation issues occur for the same data.

### BRIEF DESCRIPTION OF THE DRAWINGS

The foregoing and other aspects of the embodiments of this invention are made more evident in the following Detailed Description, when read in conjunction with the attached Drawing Figures, wherein:
Figure 1 is useful when explaining a problem that is addressed and solved by the exemplary embodiments of this invention.
Figure 2 contrasts a commercial application that provides only a first invalidation cause with multiple invalidation causes that can be returned by the operation of a Fare Invalidation Auditing system in accordance with embodiments of this invention.
Figure 3 shows a high level view of the Fare Invalidation Auditing system in accordance with the embodiments of this invention.
Figures 4 and 5 are exemplary screen shots showing how an airline can identify non-priceable fares based on an input: Market (City pair), Range of dates, stay, cabin and output: Invalid Fares identification, and how an airline can be aided to detect an error in its filing in a given true pricing context based on an input: Specific Fare at a given date and an output: All Fare invalidation causes, respectively.
Figure 6 shows a block diagram of the Invalidation Detector sub-system depicted in Figure 3.
Figure 7 is a logic flow diagram depicting a principle of operation of an Invalidation Handler shown in Figure 6.
Figure 8 shows a Fare Record having a Record1 and a Record2, and is useful when explaining a No Data Found result that is returned by the Invalidation Detector sub-system.
Figure 9 is a block diagram of an Invalidation Causes Displayer sub-system shown in Figure 3.
Figure 10 shows an Extractor component that forms a part of the Invalidation Causes Displayer sub-system of Figure 9.
Figure 11 is useful when explaining the operation of the Invalidation Detector sub-system of Figure 6 and the Invalidation Handler of Figure 7 when date ranges are processed.
Figure 12 is a logic flow diagram that illustrates the operation of a method, and a result of execution of computer program instructions, in accordance with the exemplary embodiments of this invention.

### DETAILED DESCRIPTION

The exemplary embodiments of this invention overcome the problems referred to above by creating a log file containing information about errors that occur when processing pricing requests, and further processing an invalid fare from the perspective of providing a full assessment of the cause or causes of the fare invalidity. These operations can be performed using one or more data processors executing computer code stored in one or more non-transitory storage medium, which in operation implement what may be referred to for convenience, and not by way of limitation, as an Invalidation Handler module and related components, modules and sub-systems.

So-called log files are well known in the computing, server, and database arts. An example is a server log that includes one or more files. The server log is automatically created and maintained by a server to record some type of activity performed by the server.

The use of the exemplary embodiments provides a data (fare data) filer (e.g., the filing expert shown in Figure 1) with (a) a tool to automate the control of the filing, while (b) also providing the filer with an understandable view of what in the pricing process triggered the fare invalidation, while (c) also providing an end-user with a debugging tool to investigate in a holistic manner all of the reasons that can result in an unexpected fare invalidation.

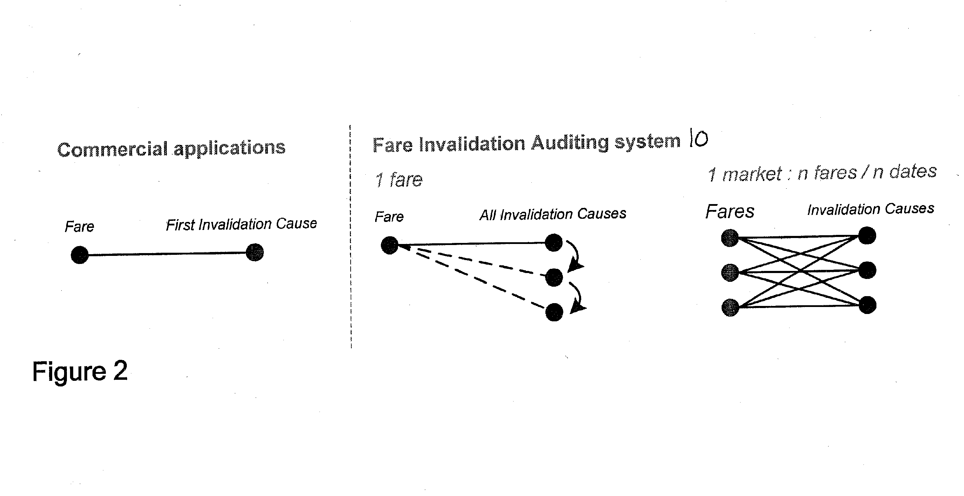

This last feature (c) is made evident in Figure 2. In the scope of conventional commercial applications the Pricing Engine 7 is optimized to minimize the data volume processed and to reject invalidated fares at the beginning of the process. As a result the user may only see a first invalidation cause. However, a Pricing Engine in accordance with this invention, referred to hereafter as (an enhanced) Pricing Engine 7', includes a Fare Invalidation Auditing system 10 that is optimized to compute all of the causes for a fare invalidations. Note that the complexity can grow if one considers one market with a plurality of fares and dates. On a given market (origin-destination city pair), at a given travel date, there can be hundreds of filed fares, plus the numerous restrictions that can be attached to the fares, and the volume of potential pricing results (combination of fares files * outbound dates * inbound dates * pricing dates) is likely to reach more than 10 million potential pricing results.

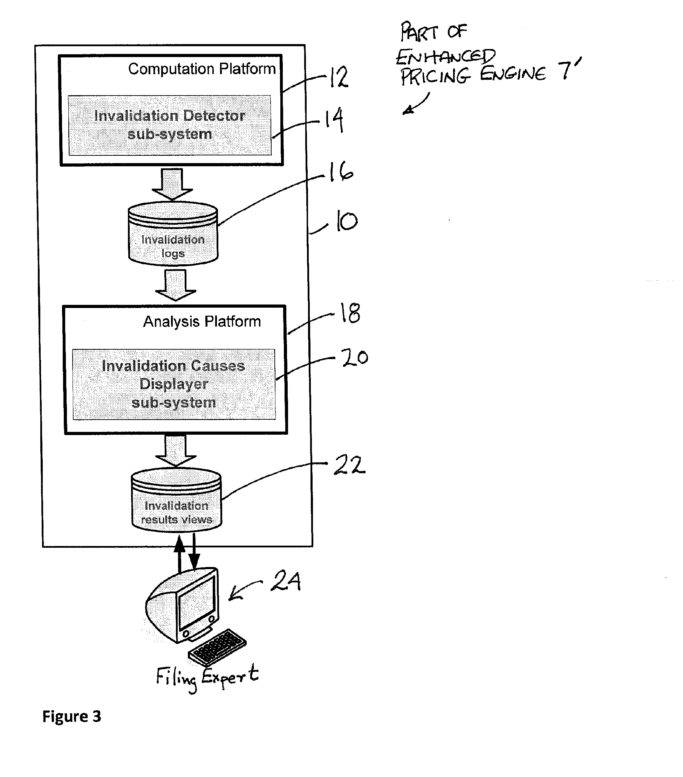

Figure 3 shows a high level view of the Fare Invalidation Auditing system 10, which can also be referred to without a loss of generality as a Fare Filing Auditing system. The Fare Invalidation Auditing system 10 forms a part of the enhanced Pricing Engine 7' and is composed of four main components. In a Computation platform 12 there is an Invalidation Detector sub-system 14 that automatically detects and stores in Invalidation logs 16 the fare invalidated by Pricing engines, associated with the reason(s) for the invalidation. The Invalidation logs 16 repository (e.g., a database) contains the raw data generated by the Invalidation Detector sub-system 14. The occurrence of an invalidation event causes an analysis platform 18, more specifically an Invalidation Causes Displayer sub-system 20, to extract the full data content based on the Invalidation logs 16 repository, generate text and consolidate precise fares invalidations results views to be understandable by, for example, the filing expert shown in Figure 1. These views are stored in an Invalidation Results Views repository 22, such as a database which may be implemented as a data warehouse. One or more of the stored views can then be provided to a user interface (e.g., a graphical user interface (GUI)) 24 for displaying the fare invalidation cause(s) to the expert filer. Note that the use of the exemplary embodiments removes the impediment shown in Figure 1 of the lack of visibility between the pricing area 1 and the filing area 5.

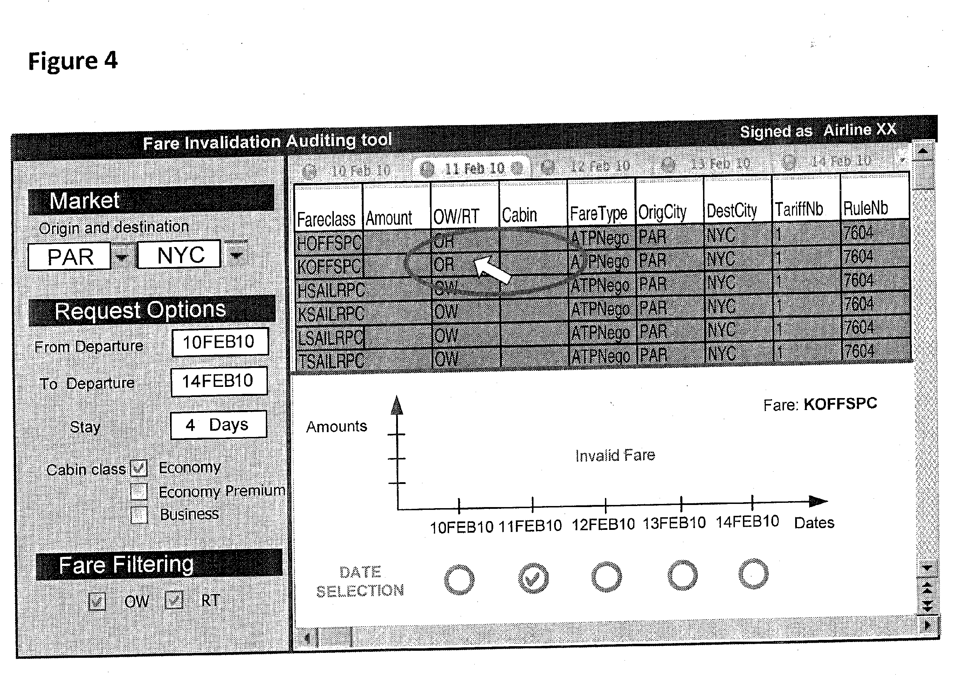

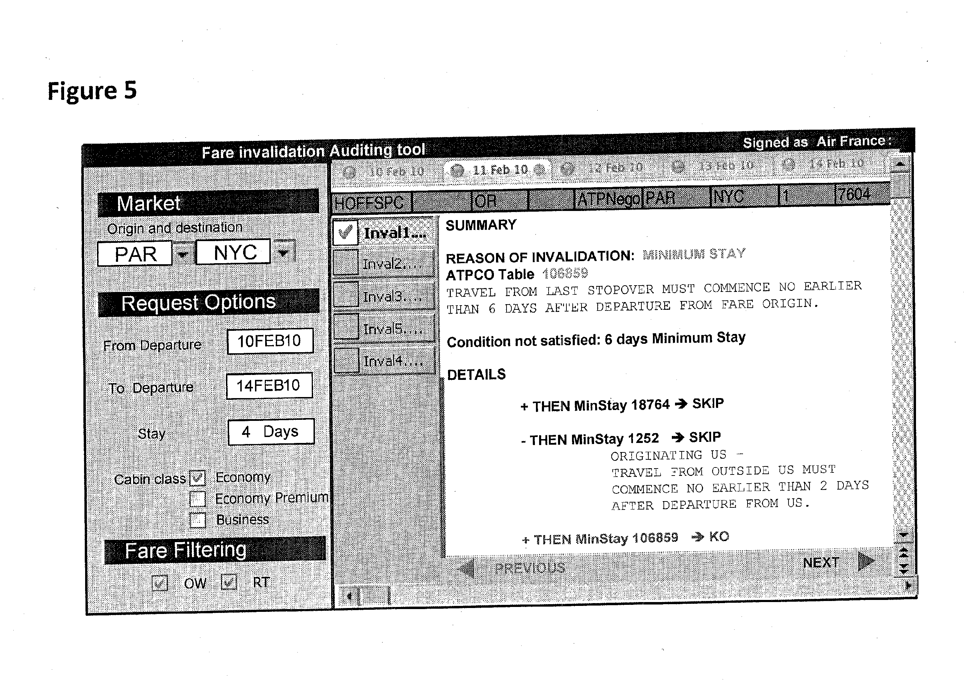

Figures 4 and 5 are exemplary views that can appear on the user interface 24 of Figure 3. Figure 4 show how an airline can identify non-priceable fares based on an input: Market (City pair), Range of dates, stay, cabin and output: Invalid Fares identification. Figure 5 show how an airline can be aided to detect an error in its filing in a given true pricing context based on an input: Specific Fare at a given date and an output: All Fare invalidation causes. In the example shown in Figures 4 and 5 the reason for invalidation is related to a minimum stay rule (6 days) in the context of an overall travel duration of only 4 days.

As can appreciated the use of the Fare Invalidation Auditing system 10 provides a number of advantages for customers of the GDS (e.g., airlines, providers and online travel agencies (OLTA)) such as fast reaction to data filing errors thereby increasing filing efficiency and quality. There are also a number of advantages realized by the GDS itself, such as improved customer support with faster issues analysis, enhanced error tracking during application development, faster analysis of non-regression tests in general an improved efficiency and productivity.

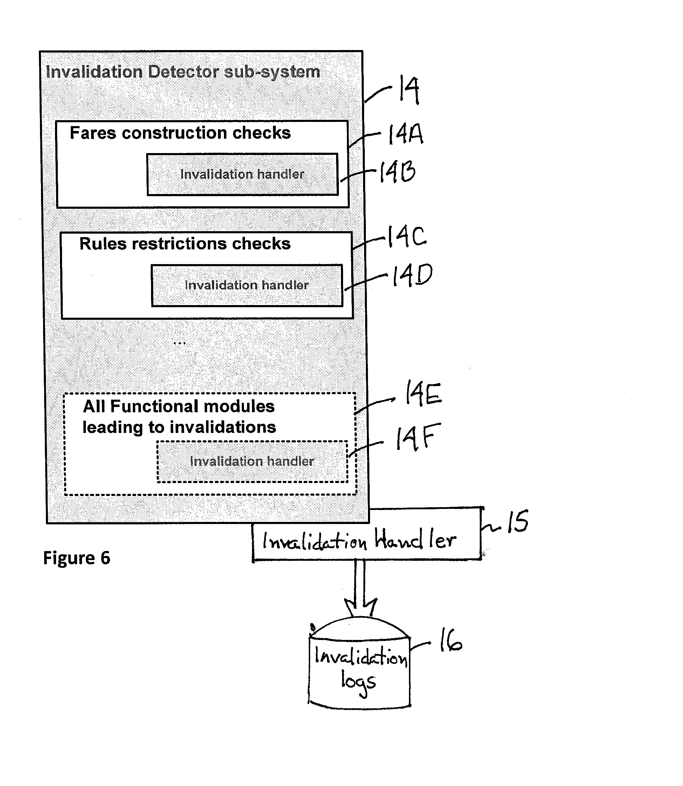

Various embodiments of this invention are further described in greater detail with reference to Figures 6-11. The exemplary embodiments accommodate a number of complexities, such as the very large volume of filed data that typically exists, the very large volume of priced data that typically exists, and the typically high level of complexity of the Pricing Engine 7'.

Figure 6 shows a block diagram of the Invalidation Detector sub-system 14. The Invalidation Detector sub-system 14 operates to detect the reason(s) for a fare invalidation and stores the reasons accordingly in the Invalidation logs repository 16. The Invalidation Detector sub-system 14 can be based on a Massive Computation Platform (MCP) architecture as one non-limiting embodiment. A purpose of the Invalidation Detector sub-system 14 is to return a list of all reasons for the invalidation of a given fare in a true pricing context.

First, and as opposed to conventional Pricing Engine behavior, the Pricing Engine 7' process is modified to retain invalidated fares, overriding the failed status in order to further process the invalidated fares. In practice a fare that is not returned by the Pricing Engine 7' as a Pricing solution may have different reasons for being invalid. For example, a given fare can be first invalidated due to a Category 03 cause (Seasonality) and then due to a Category 08 cause (Stopovers). In this case the Invalidation Detector sub-system 14 generates two reasons for the invalidation of the given fare.

The Invalidation Detector sub-system 14 includes a fares construction checks module 14A having an associated invalidation handler 14B, a rules restrictions checks module 14C having an associated invalidation handler 14D, and an all functional modules leading to invalidations module 14E having an associated invalidation handler 14F. While multiple invalidation handlers 14B, 14D, 14F are shown, in practice there could be one Invalidation Handler 15 that is called/invoked as needed. In practice this component can be called several times during the Pricing process and more particularly each time a fare invalidation event is encountered.

The Invalidation Handler 15 component logs all reasons for fare invalidation and allows the Pricing process to further process the invalidated fare. The output data are then stored in the dedicated invalidations logs repository 16.

Various constraints and considerations are associated with the Invalidation Handler 15. For example, the Invalidation Handler 15 is preferably generic and has the same application program interface (API) that is called from anywhere in the process. In general, the Invalidation Handler 15 is responsible for the functional consistency of the fare processed.

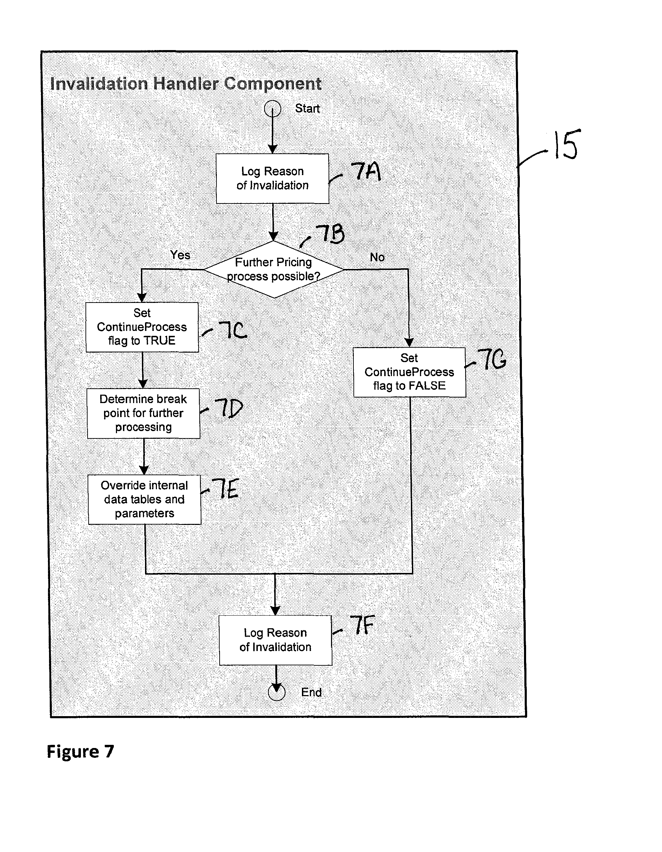

The principle of operation of the Invalidation Handler 15 is shown in Figure 7 as a logical flow diagram. At Block 7A the Invalidation Handler 15 determines the reason for the fare invalidation and logs this information as a minimum in the dedicated Invalidations logs repository 16. At Block 7B the Invalidation Handler 15 takes into account the reason for the invalidation of the fare and the place where it becomes evident in the Pricing flow, and determines whether the Pricing Engine 7' is able to further process the invalidated fare, or where further evaluation is not possible. If the determination is made that the Pricing Engine 7' can further process the fare, the Invalidation Handler 15 determines to which level it can continue to remain consistent from a functional point of view. At Block 7C the Invalidation Handler 15 sets a ContinueProcess flag to True, at Block 7D it sets a break point for further processing, and at Block 7E it overrides internal data tables and parameters, thereby overriding the failed status of the fare, and validates all the related information so that the Pricing Engine 7' can continue. At Block 7F the Invalidation Handler 15 logs in the fare invalidation reason(s) in the dedicated Invalidations logs repository 16. If the determination at Block 7B is that the Pricing Engine 7' is not able to further process the invalidated fare then control passes to Block 7F to log this data.

In greater detail the goal of the operation at Block 7A, i.e., the determination of the reason for invalidation and the logging of the related raw data, is to log all relevant information that can explain what has been done by the Pricing Engine 7' and on which criteria the fare has been invalidated. For example, assume that an invalidation is raised at the rule level (Rules restrictions checks block 14C of Figure 6). A rule describes under which condition a fare record can be sold to a passenger for a given itinerary. A Category record identifies the necessary conditions (location1, location2, effective and discontinue datesY) for a rule to be attached to the fare record. A record 2 contains a string of records 3 that includes the effective restrictions to be applied to the fare. There is a relational indicator between each record 3.

### Example: If Cat04 Then Cat09 else Cat09

If the fare is invalidated due to the second Category 09, then the Invalidation Handler 15 logs that Category 04 was not applicable and therefore the second Category 09 was applied causing the fare to fail. In addition, the matching criteria that failed validation of the fare in the itinerary are recorded as well, and records Identifiers are preferably also stored. For example,
If 4 (Rec3ld: 345678) SKIP
Reason: Flight numbers do not match.
Else 9 (Rec3ld: 1123122) KO.
Reason: Maximum Number of Transfers permitted on the Pricing Unit

It can be noted that the actual formatting of the log data stored in the Invalidation logs repository 16 is a matter of design choice.

Continuing with the description of Figure 7, the determination is made at Block 7B whether further processing is possible or is not possible and, if it is, to which level? In these steps the Invalidation Handler 15 does not create artificial data that would corrupt the functional consistency of the Pricing Engine process. As a consequence it may be the case that further processing of the invalidated fare is not possible

To make this decision the Invalidation Handler 15 uses a set of predefined rules based on context-less information and that can be defined a *priori* by a pricing expert. The predefined rules are based on functional criteria linked to the properties of the fare products and also to the different steps of the Pricing flow. The decision making process basically determines all of the checks that can raise an invalidation, and determines a *priori* the dependencies between the different checks of the Pricing flow. Next, the following rules can be applied:

If no data is found, then there is no further possible check and only the first reason of invalidation is reported. The failed status is maintained and the fare discarded. (see the following example1);
otherwise:
if there is no dependency for a check with other pricing modules, i.e., the results of the check are not necessary for following pricing modules, the failed status is simply overridden and the fare is flagged as invalidated but not discarded.

However, if there is a dependency for a check with some other pricing module or modules, and if the output of the check that is necessary for further processing can be simulated then the failed status is overridden and the result is generated. The fare is flagged as invalidated but not discarded. Alternatively, if the output of the check that is necessary for further processing cannot be simulated then the failed status is kept and the fare is discarded.

Various non-limiting examples are now provided.

### Example1: No Data Found

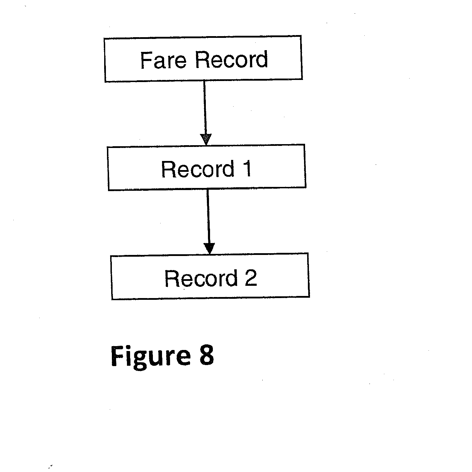

Referring to Figure 8, in order to process the rules restrictions (application of the Record2 and associated Record 3s) it is necessary to know the fare record, the Record1 and the travel information for the fare. During the pricing process of a given fare an attempt is made to match the fare to the match fields in the Record1. If a Record1 is not found this implies that the process will not be able to retrieve the indicators that will be used to match to the Record 2 and, therefore, the rule provisions that apply to the fare are not available. In such a case no further processing of the fare is possible.

### Example 2: No dependency

The Flight Application Category (Category 04) is used to further restrict a fare. It can, for example, define the carriers and flight numbers that are allowed or are not allowed on the fare. This is shown below.

### Category 04

The Fare Component must Not Be on One or More of the Following:
4M FLIGHT 6329
4M FLIGHT 6337
AND

### Category 04

The Fare Component must Not Be on One or More of the Following:
LA FLIGHTS 5502 THROUGH 5505
LA FLIGHTS 5630 THROUGH 5631.

In an itinerary where any flight within the fare component being priced does not validate against the above restrictions then the process should fail. In such a case the fare invalidation event can be simply logged and the process can continue on the fare to further detect invalidations.

### Example 3: Existing dependency that can be solved

This example is based on Category 01 which defines a set of restrictions of a specific passenger type for whom the fare applies. Within this category it is possible to define the account code eligible for the fare to be matched against the passenger account code.
Then 1
Account Code XXXX

In this case, and even if the table fails, the Pricing engine 7' can further process the fare considering it as a corporate fare as account code XXXX

### Example 4: Existing dependency that cannot be solved

Then 1
Account Code XXXX
Then 1
Account Code YYYY

In this case where the table fails the fare is not further processed as there is no knowledge as to which account code should be considered for the fare.

The problem here is that this information (if the fare is corporate or not, and with which account code) is necessary for following checks as inputs and matching criteria. Therefore to consider all the values as output for this check means several possible inputs for the next checks that may themselves result in several outputs

### Example 5: Date Range Problematic

The Invalidation Detector sub-system 14 of Figure 6 also needs to handle a problematic condition that can be introduced due to date ranges.

The problematic condition that can arise is illustrated with the example of the date range for an inbound flight when Round Trip fares are to be audited. The Invalidation Detector sub-system 14 actually receives as input a date for the start of the travel, meaning the outbound flight, but then nothing is specified regarding the date of departure of the inbound flight(s). This represents an issue to solve as the possible invalidation depends at least in part on the return date. This situation can occur in the following exemplary cases:
- A Category has a Pricing Unit application (Cat06 - Minimum Stay, Cat07 Maximum Stay)
- TSI (travel segment indicator) coded: These are used to identify a specific point or portion of travel to which the conditions of the Record 3 apply. As an example, TSI 05 - Departure from Last Point of Stopover, TSI 09― Departure from First Point of Stopover...
- There is a 994 table coded. This table is populated when the provisions in a given Record 1 segment or Record 3 data table have limited application based on the dates when reservations are made, tickets issued, and/or when travel must occur. As a consequence, and within almost all categories, this table can further validate the return date.
- A qualifying category is coded with a TSI.

The objective of the Invalidation Detection sub-system 14 is to determine all inbound start dates that are valid to build a pricing solution, taking into account that the range of inbound departure dates is within some predetermined maximum period of time, such as a calendar year in the future.

A naïve approach to this problem could simply make 365 calls to the Invalidation Detection sub-system 14 so that each day of the calendar year is simulated and submitted as a potential return date. However, this approach would be very wasteful in terms of computation time as all results would need to computed and then consolidated. In addition, and as all the data are loaded for a given Pricing date and Travel date, the use of this brute force approach would imply that the same data would be reloaded and processed for each of the 365 calls.

The naïve approach would thus have at least the following drawbacks: an inefficient use of the same key/data, and a large volume of data would need to be processed and returned.

In the preferred embodiments of this invention these problems are avoided, as the analysis and result consolidation for a one year calendar are performed within the same call to the Invalidation Detector sub-system 14.

### Principle of Rec2 stringing:

### Consider the following example:

```
 If Cat03 (TSI 10 - Arrival At Fare Destination coded)
 Then Cat06
         Min Stay X coded
 Else Cat06
         Min Stay Y coded
```

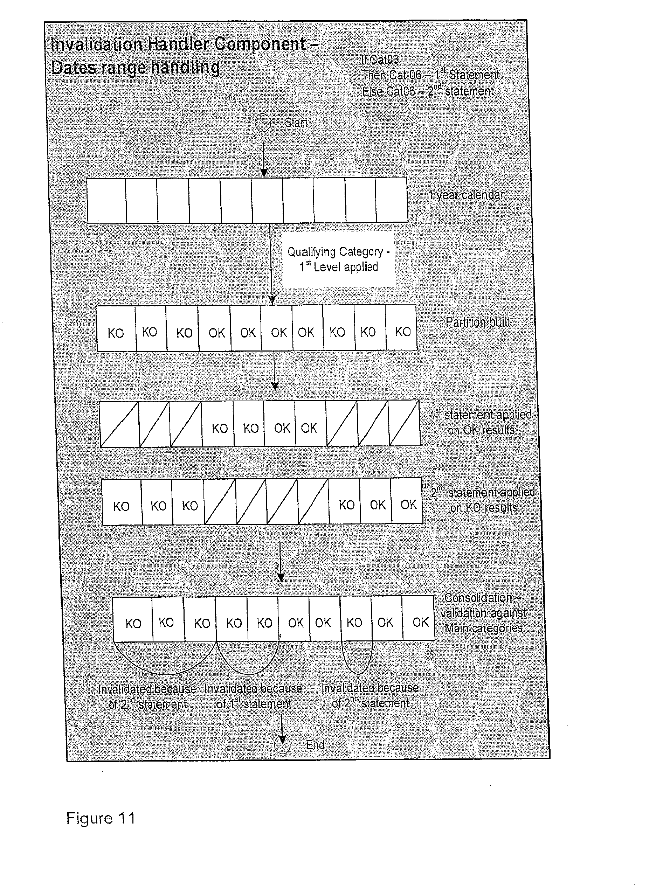

The principle that is applied by the Invalidation Handler component 15 on Rec3 stringing is depicted in Figure 11. As can be seen, the application of the qualifying category on all the days of the date range to consider provides a partition on which the different statements can then be applied. As a result the consolidation step is performed considering only the results of the main categories.

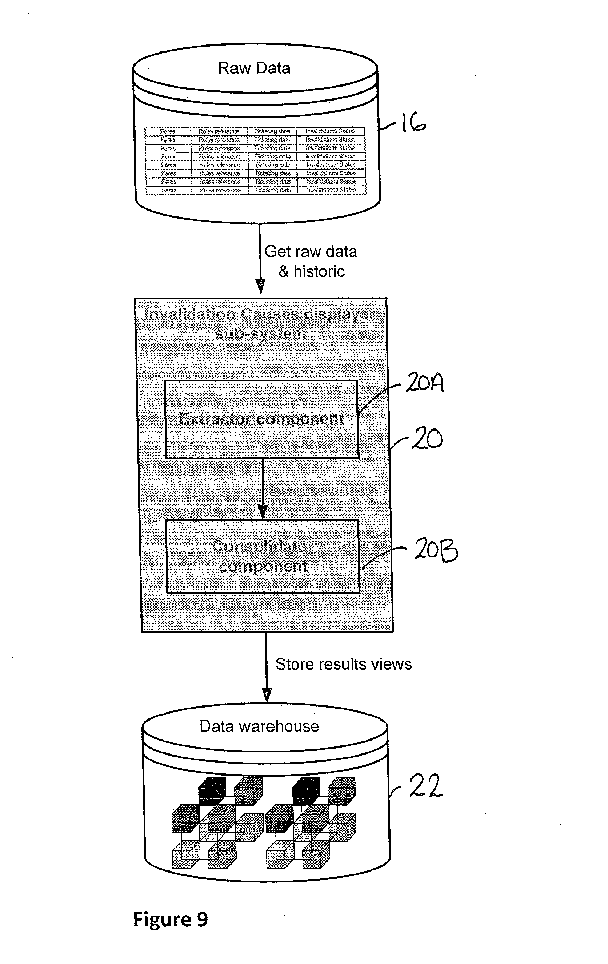

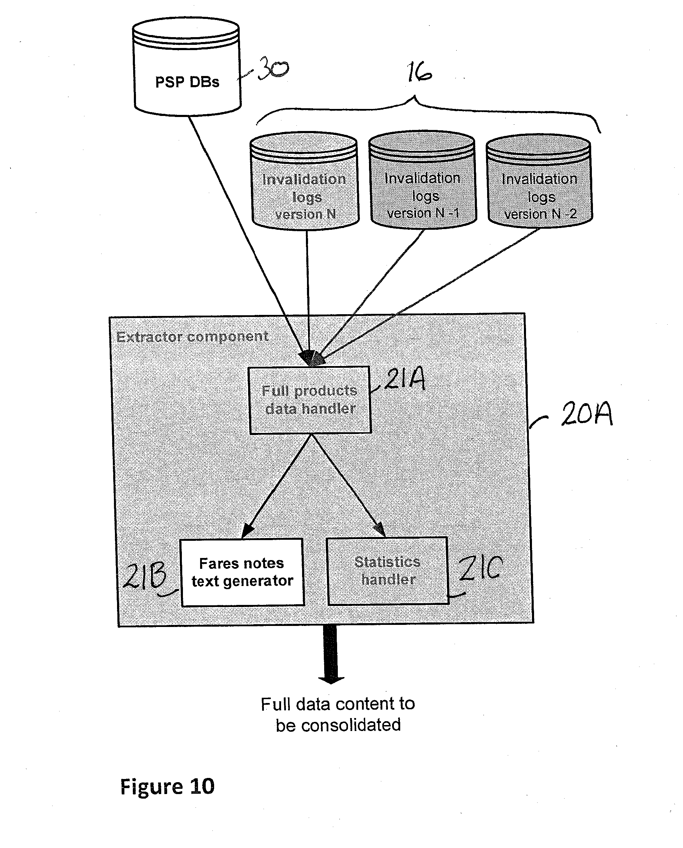

Referring to Figure 9, the above mentioned Invalidations logs repository 16 contains the logs stored by the Invalidation detector sub-system 14 as primary data (raw data). The level of information is minimal, as only fares and master rules references associated with the processing status sequences (valid, invalid, not applicable) need be stored. As shown the Invalidations logs repository 16 can store multiple records each having several fields: e.g., Fares, Rules reference, inputted pricing criteria and Invalidation status. Figure 9 also shows that from the invalidations logs raw data and pricing and shopping platform (PSP) operational data sources (PSP data bases 30, shown in Figure 10), the Invalidation Causes Displayer sub-system 20 builds complex but understandable views of the invalidations causes and stores them in a data ware house as the Invalidation results views 22 to be accessed via a decision support fare auditing system GUI. This GUI can be GUI 24 shown in Figure 3.

The Invalidation Causes Displayer sub-system 20 is composed of two primary components associated with data flows, an Extractor 20A and a Consolidator 20B. As can be seen in Figure 10 the Extractor component 20A is partitioned into three modules each handling a specific action. A Full products data handler 21A collects all involved product data in the Pricing and Shopping Platform (PSP) database 30 based on fare and master rule references. The Full products data handler 21A also retrieves additional information concerning fares (e.g., passenger type, cabin class) as well as rules restrictions sequences (invalidations reasons text from the Invalidation logs 16). The Full products data handler 21A manages product inter-dependencies and embedded rules sequencing.

A Fares notes text generator 21 B, which can be a module already existing in the Pricing engine 7', is re-used to provide rules sequences text and fares notes in the same format as for commercial applications.

A Statistics handler 21C detects recurring errors: recurring invalidating rules and/or recurring invalidated types of fares. The detection is made using a threshold previously defined by the end-user via business rules. The statistics can be created using several versions of invalidations logs 16 historic data (e.g., version N, version N-1, version N-2, etc.)

The output of the Extractor component 20A is fed as a full data content to be consolidated to the Consolidator component 20B.

The Consolidator component 20B (Figure 9) performs two complementary types of operations:
- versioning operations including data extraction ordering, synchronizing and a flip/flop mechanism on the smallest coherent unit of data (data mart);
- analysis operations, including filtering, aggregating and projecting, on previously extracted data.

The Consolidator component 20B builds coherent and optimized views for display via the Invalidation results views repository 22 and the GUI 24.

The Invalidation Results Views repository 22 contains the consolidated views for display. It can be structured as a data warehouse where each data mart is structured with different combinations of tables, columns and rows, and a specific view optimized for a specific display. As employed herein a data warehouse can be considered as a data repository designed to speed reporting and analysis at different levels of aggregation. Data in the data warehouse can be de-normalized via a dimension-based model (as opposed to an operational data storage optimized for preservation of data integrity and speed of recording). A data mart is a data subset of a data warehouse store, typically oriented to a specific purpose or major data subject.

The end result can be the display of information to a user, such as the expert filer, that is similar to that shown in Figures 4 and 5, thereby providing a concise explanation as to why a particular fare was deemed to be invalid during operation of the Pricing Engine 7'.

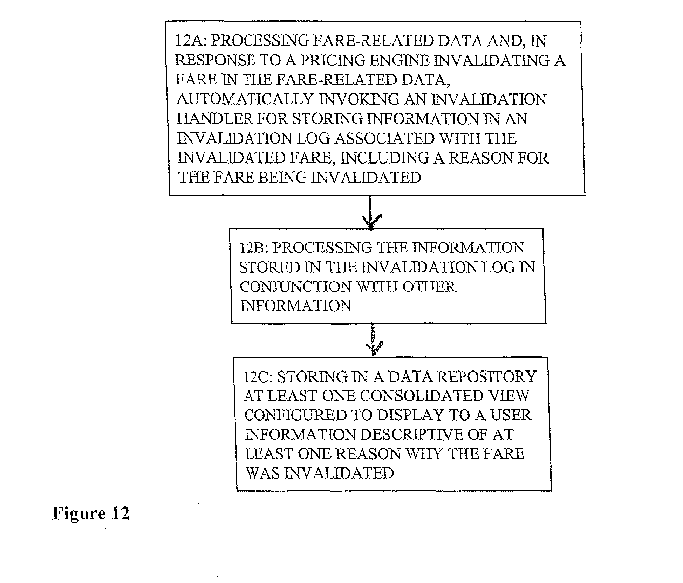

Figure 12 is a logic flow diagram that illustrates the operation of a method, and a result of execution of computer program instructions, in accordance with the exemplary embodiments of this invention. In accordance with these exemplary embodiments a method to operate a pricing engine in response to a request to price a travel product comprises, at Block 12A, a step of processing fare-related data and, in response to the pricing engine invalidating a fare in the fare-related data, automatically invoking an invalidation handler for storing information in an invalidation log associated with the invalidated fare, including a reason for the fare being invalidated. Block 12B there is a step of processing the information stored in the invalidation log in conjunction with other information. At Block 12C there is a step of storing in a data repository at least one consolidated view configured to display to a user information descriptive of at least one reason why the fare was invalidated.

The various blocks shown in Figure 12 may be viewed as method steps, and/or as operations that result from operation of computer program code, and/or as a plurality of coupled functional hardware blocks constructed and arranged to carry out the associated function or functions.

In general the various modules and sub-systems depicted in Figures 3, 6, 9 and 10 can be implemented using one or more data processors and computing platforms, including servers and special purpose or general purpose computers, that are interconnected with memory devices and memory systems storing computer software code, as well as the various databases referred to above. These various components may be co-located or they could be geographically distributed and interconnected with one another using one or more packet data networks, including the Internet.

The various exemplary embodiments may be implemented in hardware or special purpose circuits, software, logic or any combination thereof. For example, some aspects may be implemented in hardware, while other aspects may be implemented in firmware or software which may be executed by a computer, controller, microprocessor or other computing device, although the invention is not limited thereto. While various aspects of the exemplary embodiments of this invention may be illustrated and described as block diagrams, flow charts, or using some other pictorial representation, it should be understood that these blocks, apparatus, systems, techniques or methods described herein may be implemented in, as non-limiting examples, hardware, software, firmware, special purpose circuits or logic, general purpose hardware or controller or other computing devices, or some combination thereof.

The foregoing description has provided by way of exemplary and non-limiting examples a full and informative description of various method, apparatus and computer program software for implementing the exemplary embodiments of this invention. However, various modifications and adaptations may become apparent to those skilled in the relevant arts in view of the foregoing description, when read in conjunction with the accompanying drawings and the appended claims. As but some examples, the use of other similar or equivalent types of system / network architectures may be attempted by those skilled in the art. However, all such and similar modifications of the teachings of this invention will still fall within the scope of the embodiments of this invention.

Further, the names used above the various modules, sub-systems and components (e.g., data warehouse, Invalidation Detector sub-system, Invalidation Causes Displayer sub-system, Invalidation Handler, etc.) are not intended to be limiting in any way, as these various modules, sub-systems and components can be referred to by any suitable names.

Furthermore, some of the features of the exemplary embodiments of this invention may be used to advantage without the corresponding use of other features. As such, the foregoing description should be considered as merely illustrative of the principles, teachings and embodiments of this invention, and not in limitation thereof.

## Claims

1. A computer implemented method to operate a pricing engine (7) in response to a request to price a travel product, comprising:
- processing fare-related data and, in response to the pricing engine (7) invalidating a fare in the fare-related data, automatically invoking an invalidation handler (15) for storing information in an invalidation log associated with the invalidated fare, including a reason for the fare being invalidated;
- processing the information stored in the invalidation log in conjunction with other information; and
- storing in a data repository (16) at least one consolidated view configured to display to a user information descriptive of at least one reason why the fare was invalidated,
- and where the invalidation handler makes the determination based on a consideration of all fare checks during a fare pricing flow that can cause an invalidation, and a consideration of dependencies between the different fare checks of the pricing flow, and applies a set of rules comprising,
if no data can be found from the fare the fare is flagged as being invalidated and the pricing engine does not continue to process the fare;
otherwise, if data can be found and if there is no dependency for another fare check in the fare pricing flow the fare is flagged as being invalidated and the pricing engine does continue to process the fare;
otherwise, if data can be found and if there is a dependency for another fare check in the fare pricing flow a determination is made if the processing for the another fare check can be simulated,
where if the processing for the additional fare check can be simulated then the fare is flagged as being invalidated and the pricing engine does continue to process the fare,
and where if the processing for the additional fare check cannot be simulated then the fare is flagged as being invalidated and the pricing engine does not continue to process the fare.

2. The method as in claim 1, where the fare is invalidated for violating at least one of a fare construction criterion and a fare rule restriction criterion, and where the information stored in the invalidation log is descriptive of at least what operations were performed by the pricing engine on the fare and which criterion or criteria caused the fare to be invalidated.

3. The method as in claim 1 or 2, where processing the information stored in the invalidation log in conjunction with other information comprises processing the information stored in the invalidation log in conjunction with related product data from a pricing and shopping platform database.

4. The method any of the preceding claims, where processing the information stored in the invalidation log in conjunction with other information further comprises generating statistics regarding recurring errors that result in fare invalidations.

5. The method of the preceding claim, where generating statistics comprises examining historical invalidation logs.

6. A non-transitory computer-readable medium that contains software program instructions, where execution of the software program instructions by at least one data processor results in performance of operations that comprise execution of the method of any of the preceding claims.

7. A system that comprises at least one data processor configured to operate a pricing engine (7) in response to a request to price a travel product; and comprising means for executing the method of any claims 1 to 5.
